# EUROPÄISCHE PATENTANMELDUNG

(11) **EP 0 530 717 A1**
(43) Veröffentlichungstag der Anmeldung: **10.03.1993**
(21) Anmeldenummer: 92114782.3
(22) Anmeldetag: 28.08.1992
(51) Int. Cl.: B60L 11/18

(54) **Elektrische Antriebseinheit für mobile Fahrzeuge**

(30) Priorität: 29.08.1991 DE 4128756
(71) Anmelder: Ritter, Reinhardt, 73230 Kirchheim (DE); Waschbusch, Hans, D-73230 Kirchheim (DE)
(72) Erfinder: Ritter, Reinhardt, W-7312 Kirchheim/Teck (DE)
(74) Vertreter: Kirschner, Klaus Dieter, Dipl.-Phys.

(57) **Zusammenfassung**

Die elektrische Antriebseinheit für mobile Fahrzeuge umfaßt mindestens einen aus Batterien gespeisten Elektromotor (6), eine Kraftübertragungseinrichtung, die den Elektromotor mit der Antriebswelle des angetriebenen Elements verbindet, und eine Motorsteuerungeinrichtung (4). Der Elektromotor (6) ist ein bürstenloser Synchronmotor mit einer Nennbetriebsspannung im Bereich von ca. 210 V bis 600 V. Die Motorsteuerungeinrichtung ist eine Transistor- oder Thyristor-Pulswechselantriebssteuerung. Der Synchronmotor ist im Vier-Quadranten-Betrieb betrieben. Die Motorwelle des Elektromotors (6) ist mit der Antriebswelle des angetriebenen Elements bzw. über die Getriebewelle eines Getriebes (8) mit dem angetriebenen Element direkt fest verbunden.

## Beschreibung

Die Erfindung bezieht sich auf eine elektrische Antriebseinheit für mobile Fahrzeuge, z. B. für ein elektrisches Automobil.

Im Zuge der enormen Umweltbelastung durch Kraftfahrzeuge mit Verbrennungsmotoren, die auch mit dem Einsatz schadstoffreduzierter Motoren insbesondere in den Innenbereichen von Großstädten nur begrenzt eingeschränkt werden konnte, werden zunehmend alternative Antriebssysteme für Automobile angestrebt. Aufgrund der vollständigen Unterdrückung des Schadstoffausstoßes in Fahrzeugnähe und dem stark reduzierten Fahrgeräusch werden dabei Elektroantriebe bevorzugt entwikkelt.

Bei der Entwicklung mobiler Elektroantriebe wird das Ziel einer hohen Fahrleistung (Beschleunigung, Höchstgeschwindigkeit und Reichweite) durch das Gewicht der jeweils erforderlichen Antriebseinheit, das i.A. aus den Elementen Energiespeicher (Batterie), Motor und Antriebssteuerung besteht, beschränkt.

Beim gegenwärtigen Stand der Entwicklung wird dieses Problem dadurch verringert, daß die Fahrzeugkarosserien möglichst leicht und widerstandsarm konstruiert werden und daß Spezialbatterien hoher Kapazität und geringen Gewichtes zum Einsatz gebracht werden. Die dabei verwendeten Motoren sind Gleichstrommotoren verschiedener Schaltungsausführung, Asynchronmotoren oder Synchronmotoren, die mit Betriebsnennspannungen bei etwa 100 V betrieben werden.

Gleichstrommotoren weisen grundsätzlich Rotorwicklungen auf, mit denen über einen Schleifkontakt (Bürsten) mit wechselnder Polung ein veränderliches Magnetfeld erzeugt wird, dessen Wechselwirkung mit dem Feld des Stators zu dem gewünschten Drehmoment des Rotors führt. Nachteilig an Gleichstrommotoren ist ihr begrenztes Leistungsvermögen (<20 kW), die Abbremsung des Rotors durch die Schleifkontakte und die schwer steuerbare wechselweise Nutzung als Motor bzw. Generator. Bei Abschaltung der Stromversorgung wird dieser Motortyp durch die Bürstenreibung schnell abgebremst, so daß die Kraftübertragung zum Getriebe wie beim Verbrennungsmotor über eine trennbare Kupplung erfolgen muß.

Demgegenüber sind Asynchronmotoren bürstenfreie Motoren, in denen das Rotorfeld durch Induktionswirkungen des Statorfelds in den Wicklungen des Rotors erzeugt wird. Sie weisen eine größere Leistungsfähigkeit auf, haben jedoch die Nachteile eines gößeren Gewichts und eines größeren Trägheitsmoments, was beim Antrieb von Fahrzeugen unbefriedigend ist.

Synchronmotoren, die mit Betriebsnennspannungen bei etwa 100 V betrieben werden, belasten die Batterien mit hohen Strömen, was den Wirkungsgrad der Antriebseinheit beeinträchtigt. Ferner werden für die hohen Ströme, die aus den Batterien gezogen werden, entsprechend starke Kabel erforderlich. Schließlich ergeben sich wegen der hohen Ströme auch Probleme mit der Wärmeentwicklung.

Somit ergeben sich bei den bislang verwendeten Motortypen die Nachteile geringer Leistungsfähigkeit bzw. geringer Effektivität und erhöhten Wartungsaufwandes.

Aufgabe der vorliegenden Erfindung ist es, eine Antriebseinheit für elektrisch betriebene mobile Fahrzeuge, z.B. ein Automobil bereitzustellen, welches bei angemessener Leistung und verbesserter Fahrzeugdynamik eine größere Reichweite pro Batterieladung aufweist und damit einen höheren Wirkungsgrad erbringt.

Diese Aufgabe wird durch eine Antriebseinheit für elektrisch betriebene mobile Fahrzeuge mit mindestens einem aus Batterien gespeisten Elektromotor, einer Kraftübertragungseinrichtung, die den Elektromotor mit der Antriebswelle des angetriebenen Elements verbindet, und einer Motorsteuerungeinrichtung gelöst, das dadurch gekennzeichnet ist, daß der Elektromotor ein bürstenloser Synchronmotor mit einer Nennbetriebsspannung im Bereich von ca. 210 V bis 600 V ist, daß die Motorsteuerungeinrichtung eine Transistor - Pulswechselrichter-Antriebssteuerung aufweist, und daß der Synchronmotor im Vier-Quadranten-Betrieb betrieben ist. Durch diese Ausgestaltung der Antriebseinheit ergibt sich eine angemessene Fahrleistung, eine verbesserte Fahrzeugdynamik und wie Tests mit einem Testfahrzeug gezeigt haben, eine gegenüber herkömmlichen Elektrofahrzeugen erheblich größere Reichweite pro Batterieladung und damit ein höherer Wirkungsgrad.

Der hohe Spannungsbereich der Nennbetriebsspannung von etwa 210 V - 600 V hat zur Folge, daß der gesamte Wirkungsgrad des Drehstrom-AC-Servoantriebs in Verbindung mit dem Synchronmotor und der Batterieneinheit erhöht wird. Daraus resultiert eine überdurchschnittlich gute Dynamik, ein günstiges Drehmoment/Trägheitsmomenten-Verhältnis und ein sehr gutes Leistungsgewicht. Ferner ergeben sich durch dieses Konzept kleine Batterieströme und dadurch eine geringere Batteriebelastung, das heißt die C1-Entladekurve liegt auf einem niedrigen Niveau, so daß die Reichweite weit über den bisherigen Reichweiten liegt.

Ein vorteilhafte Ausgestaltung der erfindungsgemäßen Antriebseinheit ist dadurch gekennzeichnet, daß der Synchronmotor Seltene-Erden-Magnete, einen bürstenlosen Tachogenerator und einen elektronischen Rotorlagegeber für eine elektronische Kommutierung aufweist. Dadurch ergibt sich zunächst ein hohes nutzbares Spitzendrehmoment über dem gesamten Drehzahlbereich durch Wegfall der elektromechanischen Komotierung. Ferner resultiert eine überdurchschnittlich gute Dynamik durch höchste Steife und günstiges Drehmoment/Trägheitsmomentenverhältnis und ein noch erheblich günstigeres Leistungsgewicht. Durch das reduzierte Rotorträgheitsmoment, das nur etwa 20 - 30 % des Rotorträgheitsmoments bei der Leistung vergleichbaren Asynchronmotoren oder konventionell aufgebauten Synchronmotoren beträgt, wird der Gebrauch einer "elektronischen Kupplung" für den Fahrzeugeinsatz ermöglicht, das heißt die mechanische Kupplung für den Gangwechsel kann entfallen.

Gemäß einer vorteilhaften Ausführungsform der Erfindung ist die Antriebseinheit dadurch gekennzeichnet, daß die Motorwelle des Elektromotors mit der Antriebswelle des angetriebenen Elements bzw. über die Getriebewelle eines Getriebes mit dem angetriebenen Element direkt fest verbunden ist. Mit anderen Worten ist keine Kupplung vorhanden, wie sie bei herkömmlichen benzinbetriebenen Kraftfahrzeugen vorgesehen ist. Damit ergibt sich der Vorteil, daß ein normales serienmäßiges, handelsübliches Getriebewerwendet werden kann, wobei eine gute Fahrzeugdynamik erhalten bleibt. Das "Kuppeln" erfolgt dann in vorteilhafter Weise durch das Sperren der Reglerfreigabe bzw. der Ansteuerung des Elektromotors. Motor und Getriebe oder angetriebenes Element sind stets kraftschlüssig miteinander verbunden. Damit können auch die Vorteile des Elektroantriebs optimal genutzt werden.

Nach einer vorteilhaften Ausführungsform der Erfindung ist die Antriebseinheit gekennzeichnet durch eine elastische Verbindungseinrichtung zwischen der Motorwelle des Elektromotors und der Antriebswelle des angetriebenen Elements bzw. der Getriebewelle des Getriebes. Bei der direkten mechanischen Ankopplung des Elektromotors an die Antriebswelle des angetriebenen Elements bzw. die Getriebewelle des Getriebes kann es vorkommen, daß die Achse der Motorwelle und die Achse der Antriebswelle bzw. der Getriebewelle eine leichte Fehlausrichtung aufweisen. Eine derartige Fehlausrichtung wird durch die Elastizität der Verbindungseinrichtung aufgenommen, sodaß ein ruhiger Lauf des Einheits gewährleistet ist.

Nach einer vorteilhaften Ausführungsform der Erfindung ist die Antriebseinheit dadurch gekennzeichnet, daß die Verbindungseinrichtung eine Gummischeibe aufweist, die einerseits mit einem Flansch mit einer Verbindungsmuffe zur Verbindung mit der Motorwelle und andererseits mit einem Flansch mit einer Verbindungsmuffe zur Verbindung mit der Antriebswelle bzw. der Getriebewelle verbunden ist. Dadurch wird eine mechanisch besonders einfache Lösung für die Verwirklichung der elastischen Verbindungseinrichtung gegeben. Das Gewicht der Verbindungseinrichtung kann dadurch auf ein Minimum herabgesetzt werden, daß für die Flansche Leichtmetall oder eine Leichtmetall-Legierung eingesetzt wird.

Eine vorteilhafte Ausgestaltung der erfindungsgemäßen Antriebseinheit ist gekennzeichnet durch ein Leerlaufsteuerglied, das einen elektrischen Schalter zur Sperrung der Ansteuerung des Elektromotors aufweist, wobei der Schalter vorzugweise durch ein "Kupplungspedal" oder durch ein "Gaspedal" bei dessen Rücknahme betätigbar ist. Auf der Grundlage der optimalen Anpassung der Antriebseinheit erlaubt diese Ausgestaltung eine Gangwechselabfolge ohne herkömmliche Kupplung. Durch die Sperrung der Reglerfreigabe wird der Synchrommotor im Millisekundenbereich momentenfrei. Da Motorwelle und Getriebe-Eingangswelle bzw. das angetriebene Element mechanisch gekoppelt sind, ist dann nur noch das niedrige Rotorträgheitselement des Synchrommotors wirksam, das dem Restträgheitsmoment einer konventionellen, mechanisch betätigten Kupplung entspricht. Ein manueller Gangwechsel ist damit bei einem serienmäßigen Fahrzeuggetriebe möglich, das heißt, die herkömmliche Kupplung kann entfallen.

Eine weitere vorteilhafte Ausgestaltung der erfindungsgemäßen Antriebseinheit ist dadurch gekennzeichnet, daß mit einem Bremspedal ein Wegsensor gekoppelt ist, der die Rückspeisung in die Batterien derart steuert, daß in einem anfänglichen Bereich eines Bremspedal-Leerwegs, bevor die normale Bremskraft über die Bremsen einsetzt, keine Rückspeisung erfolgt, während in dem rechtlichen Bereich des Bremspedal-Leerwegs eine Rückspeisung erfolgt. Vorzugsweise ist ein Progressivitäts-Schalter vorgesehen, der in dem restlichen Bereich des Bremspedal-Leerweges wirksam ist. Der anfängliche Bereich des Bremspedal-Leerweges kann dabei ca. 10 % betragen. In dem restlichen Breich des Bremspedal-Leerweges wird durch den Wegsensor und den Progressivitätsschalter in Abhängigkeit von der Außentemperatur, die durch einen Sensor meßbar ist, oder manuell durch einen Schalter entsprechend den Fahrbahngegebenheiten (Sommer/Winter-Betrieb) die Rückspeisung eingestellt. Der Progressivitätsregler wird bei ABS ausgeschaltet, um sicherzustellen, daß der Antriebsstrang drehmomentenfrei wird und somit die ABS-Wirkung voll erhalten bleibt. Wird das Bremspedal über den Bremspedal-Leerweg hinaus niedergedrückt, erfolgt eine Abbremsung mit den mechanischen Bremsen zusätzlich zu der Rückspeisung.

Die erfindungsgemäße Antriebseinheit ist generell für elektrisch betriebene mobile Fahrzeuge anwendbar, insbesondere für Flugzeuge, Elektroboote und Elektroautos. Die angetriebenen Elemente sind entsprechend die Propeller von Luftfahrzeugen, die Schrauben von Wasserfahrzeugen, die Räder von Landfahrzeugen oder dergl.

Vorteilhafte Ausgestaltungen der Erfindung sind in den Unteransprüchen gekennzeichnet.

Ein Ausführungsbeispiel der Erfindung in Bezug auf ein Elektroauto wird anhand der beiliegenden Zeichnungen beschrieben. Es zeigen:
- Fig. 1: eine perspektivische, schematische Darstellung eines Elektroautos, wobei die Anordnung der Komponenten der Antriebseinheit dargestellt sind;
- Fig. 2: eine auseinandergezogene Darstellung der Verbindungseinrichtung zwischen dem Elektromotor und dem Getriebe des Elektroautos nach Fig. 1;
- Fig. 3: ein Blockschaltbild der Antriebseinheit;
- Fig. 4: eine Schaltung des Leistungsteils der Motorsteuereinrichtung;
- Fig. 5: eine Schaltung der Steuerglieder an der Motorsteuereinrichtung;
- Fig. 6: eine Schaltung für die Batteriesteuerung mit Not-Aus-Schalter.

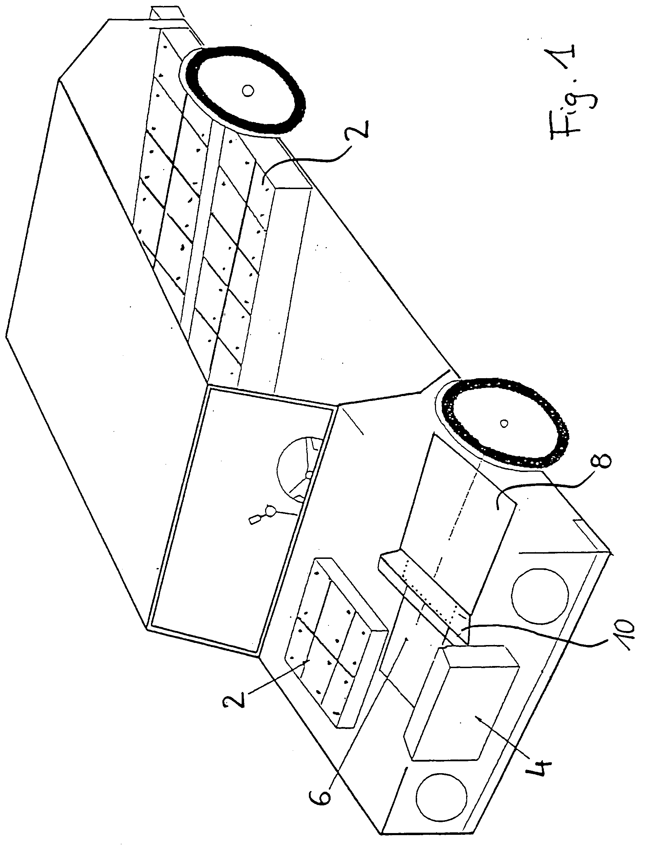

In Fig. 1 sind die Komponenten der Antriebseinheit schematisch in einem Elektroauto dargestellt. Achtzehn Traktions-Blockbatterien 2 sind zum Teil im Kofferraum und zum Teil im Motorraum des Elektroautos angeordnet. Im Motorraum befinden sich ferner die Motorsteuereinrichtung 4, der Motor 6 und das Getriebe 8. Der Motor 6 ist mit dem Getriebe 8 durch eine Verbindungseinrichtung 10 fest verbunden. Das Getriebe 8 ist mit den angetriebenen Elementen, d.h. mit den Rädern, wie üblich verbunden.

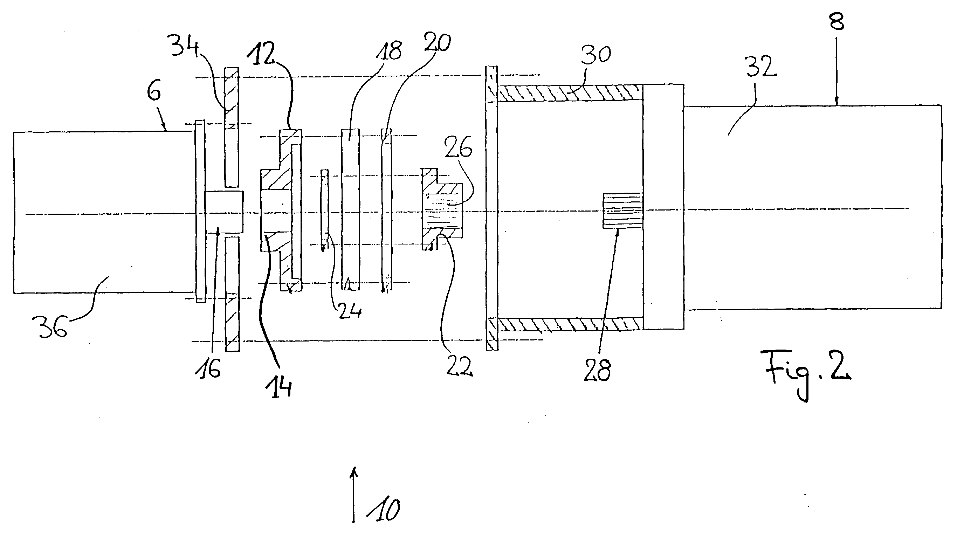

Fig. 2 zeigt in auseinandergezogener Darstellung die Verbindungseinrichtung 10 zwischen dem Motor 6 und dem Getriebe 8. Die Verbindungseinrichtung 10 weist einen motorseitigen Flansch 12 auf, der eine Verbindungsmuffe 14 aufweist, die auf die Welle 16 des Motors 6 paßt. In eingebautem Zustand ist der Flansch 12 mit der Welle 16 verkeilt. Der Flansch 12 ist mit einer Gummischeibe 18 mit Hilfe eines Rings 20 verbunden, wobei der Ring 20 durch die Gummischeibe 18 hindurch mit dem Flansch 12 verschraubt ist. Schließlich umfaßt die Verbindungseinrichtung einen getriebeseitigen Flansch 22, der an der Gummischeibe 18 mit Hilfe eines Rings 24 verbunden ist, wobei der Ring 24 mit dem Flansch 22 durch die Gummischeibe 18 hindurch verschraubt ist. Der Flansch 22 hat eine Muffe 26 mit Innenverzahnung, die auf die Verzahnung der Getriebewelle 28 paßt. Ein topfförmiges Teil 30, das an dem Gehäuse 32 des Getriebes 8 befestigt ist, bildet mit einem Flansch 34, der an dem Gehäuse 36 des Motors 6 befestigt ist, ein Gehäuse für die Verbindungseinrichtung. Der Flansch 34 ist mit dem topfförmigen 30 verschraubt. Im zusammengebauten Zustand wird daher die Antriebskraft von der Motorwelle 16 über die Verbindungseinrichtung 10 direkt auf die Getriebewelle 28 übertragen. Diese Ausgestaltung der Verbindungseinrichtung 10 bewirkt, daß bei einer leichten Fehlausrichtung zwischen der Drehachse der Motorwelle 16 und der Drehachse der Getriebewelle 28 dennoch ein ruhiger Lauf möglich ist, weil diese Fehlausrichtung von der Gummischeibe 18 aufgenommen wird und durch diese gedämpft wird.

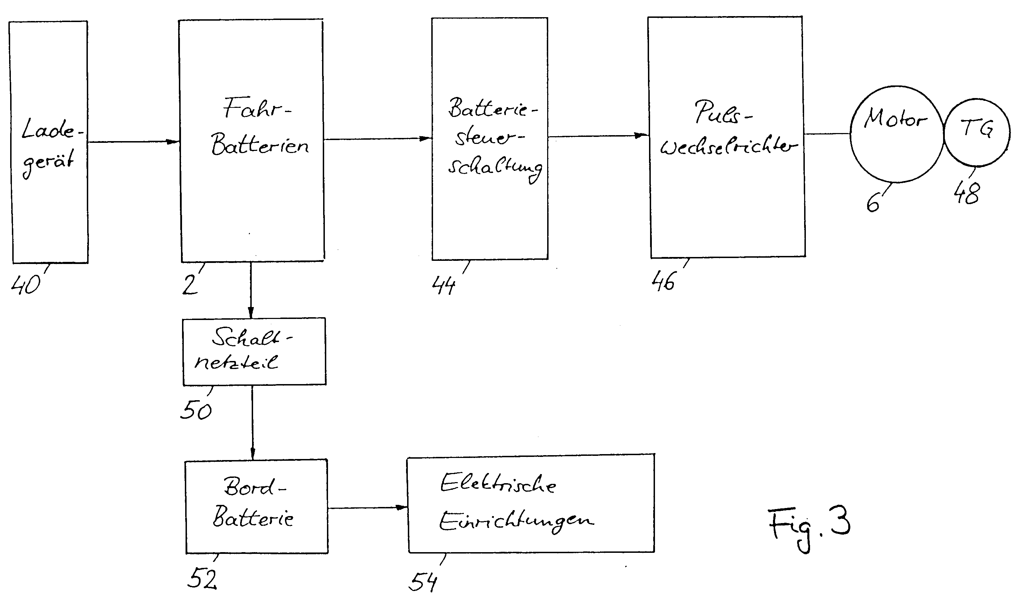

In dem Blockschaltbild von Fig. 3 sind ein mobiles Ladegerät 40, die Batterien 2, eine Batteriesteuerschaltung 44 mit Not-Aus-Schalter, ein Pulswechselrichter 46 und der Motor 6 dargestellt. Mit dem Motor 6 ist ein Tachogenerator 48 verbunden, der die Drehzahlinformationen von dem Motor 6 an den Pulswechselrichter 46 abgibt. Die Batterien sind in gekapselten Batteriekästen im Fahrzeugboden- und Motorraum integriert, so daß sich eine gleichmäßige Achslastverteilung und eine hohe Crash-Sicherheit ergibt. Die Batterien 2 sind mit einem Schaltnetzteil 50 verbunden, dessen Kennwerte 14 V und 20 A sind. Das Schaltnetzteil 50 ist mit einer Bordbatterie 52 verbunden, von der elektrische Einrichtungen 54 des Elektroautos versorgt werden. Durch das Schaltnetzteil 50 erfolgt eine galvanische Trennung des Fahrstroms von dem Strom der Bordbatterie 52. Die elektrischen Einrichtungen 54 umfassen bespielsweise die Innenbeleuchtung, die Scheinwerfer, die Heizung und dergleichen.

Die Batterien 2 für den Fahrbetrieb umfassen achtzehn Traktions-Blockbatterien zu je 12 V und 50 AH. Durch Reihenschaltung der Batterien ergibt sich daher eine Nennspannung von 216 V. Der Pulswechselrichter 46 ist ein Transistor- oder Thyristor-Pulswechselrichter für Drehstrom-Vorschubantriebe, der im Vier-Quadranten-Betrieb arbeitet. Der Motor 6 ist ein Drehstrom-Servo-Motor, insbesondere ein dauererregter, bürstenloser Synchronmotor mit Seltene-Erden-Magneten, einem bürstenlosen Tachogenerator 48 für die Motordrehzahl und einen elektronischen Rotorlagegeber für eine elektronische Kommutierung. Der Motor leistet ca. 11 kW bei 6000 Umdrehungen pro Minute. Das Nenndrehmoment dieses Motors beträgt 20 Nm und das Kurzzeitdrehmoment das vierfache des Nenndrehmoments. Bei einem Testfahrzeug vom Typ VW-Polo ergaben sich mit diesen Komponenten der Antriebseinheit folgende Kennwerte:

| | |
|---|---|
| Leistung: | 11 kW bei 6000 Umdrehungen/min. |
| Drehmoment: | 20 Nm (Kurzzeit x 4) |
| Nennbetriebsspannung: | 216 V |
| Leergewicht: | 1.060 kg |
| Zulässige Vorderachslast: | 560 kg |
| Zulässige Hinterachslast: | 500 kg |
| Höchstgeschwindigkeit: | 120 kmh |
| Beschleunigung: | 0- 50 kmh in 9 sek. |
| | 0- 80 kmh in 23 sek. |
| | 0-100 kmh in 42 sek. |
| Verbrauchskosten: | ca. 3,-- DM pro 100 km |
| Reichweite: | ca. 140 km bei konstant 50 kmh |

Die Verbrauchskosten ergeben sich aus einer Reihe von Testfahrten, wobei ein Verbrauch von 18 bis 19,2 kWh/100 km ermittelt wurde. Aus diesem Stromverbrauch errechnet sich die oben genannte Zahl für die Verbrauchskosten.

Bei den Testfahrten ergab sich bei einer Fahrt mit konstanter Geschwindigkeit mit 50 kmh eine Reichweite von ca. 140 km bei einem Verbrauch von 52 Ah bzw. 20 kWh/140 km. Dies entspricht 15 kWh/2,25 DM/100 km. Diese für den derzeitigen Stand der Technik bei Elektroautos überraschende Ergebnisse resultieren insbesondere aus der hohen Nennbetriebsspannung von 210 V im Zwischenkreis für den Betrieb des Servomotors und dem Vier-Quadranten-Betrieb, durch den im Schubbetrieb eine Energierückspeisung in den Fahrbatteriensatz erfolgt. Die Nennbetriebsspannung von 210 V bedeutet, daß der Motorstrangstrom je nach T = 60 K oder T = 100 K bei circa 75 bzw. 95 A liegt. Der Motorstrangstrom hängt von der Zwischenkreisbetriebsspannung in der Weise ab, daß der Motorstrangstrom umso kleiner wird, je höher die Zwischenkreisbetriebsspannung ist. Im Hinblick auf den Motorstrangstrom wäre es daher bevorzugt, die Zwischenkreisbetriebsspannung zu 300 V oder gar 600 V zu wählen, was derzeit aber wegen des Gewichts und der Abmessungen der Fahrbatterien Schwierigkeiten bereitet.

Je höher die Betriebsspannung ist, desto geringer ist der Durchmesser der stromzuführenden Leitungen und desto größer ist der Wirkungsgrad (Reichweite pro Amperestunden der Batterie). Bei einer Nennbetriebsspannung von 300 V sinkt beispielsweise der Motorstrangstrom bei einem Motor vergleichbarer Leistung auf ca. 60 bzw. 73 A. Bei einer Nennbetriebsspannung von 600 V sinkt der Motorstrom bei einem Motor mit vergleichbarer Leistung auf 26 bzw. 33 A.

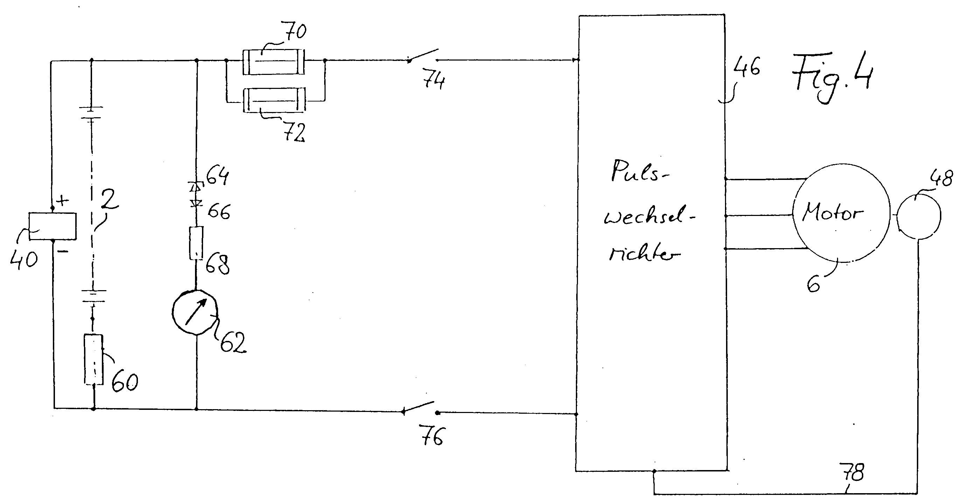

Fig. 4 zeigt eine detaillierte Darstellung des Blockschaltbildes von Fig. 3. Dem Ladegerät 40 sind die Fahrbatterien 2 und ein damit in Reihe geschalteter Meßwiderstand 60 parallel geschaltet. Der Meßwiderstand 60 hat 0,001 Ohm und dient zur Kapazitätsüberwachung der Fahrbatterien 2. Ein Spannungsmeßgerät 62 dient zur Anzeige der Batteriespannung der Fahrbatterien. Das Meßgerät 62 ist parallel zu der Reihenschaltung der Fahrbatterien 2 und des Meßwiderstandes 60 und in Reihe mit einer Zener-Diode 64, einer Diode 66 und einem Widerstand 68 geschaltet. In der Batteriespeiseleitung liegen zwei flinke Halbleitersicherungen 70, 72 zu je 80 A parallel zueinander. In der Batteriespeiseleitung und der Rückführungsleitung liegen je ein Gleichspannungsschaltschütz 74, 76, die beim Starten des Fahrzeuges geschaltet werden. An dem Pulswechselrichter 46 sind die drei Phasen L1, L2, L3 des Motors 6 angeschlossen und die Signale des Tachogenerators 48 werden über die Leitung 78 an den Pulswechselrichter 46 zurückgeführt.

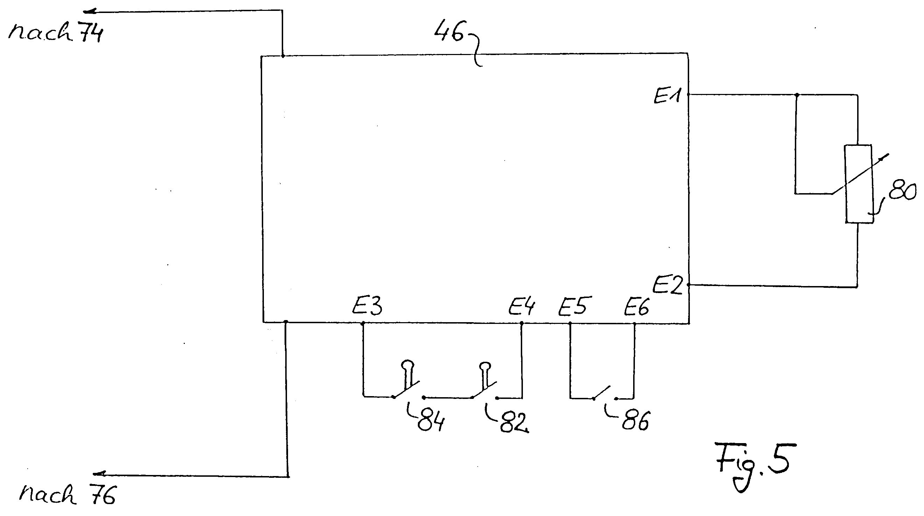

Fig. 5 zeigt den Anschluß der Steuerglieder an den Pulswechselrichter 46, die für den Fahrbetrieb eines Elektroautos erforderlich sind. Ein Drehzahlsteuerglied ist als verstellbarer Widerstand 80 (Drehpotentiometer oder Schieberegler) mit 10 K ausgebildet. Der Widerstand 80 liegt zwischen zwei Eingängen E1 und E2 des Pulswechselrichters 46. Der Widerstandswert des Widerstandes 80 wird über das "Gaspedal" betätigt. Wie bei einem mit Benzin betriebenen Kraftfahrzeug wird durch eine Feder sichergestellt, daß die Einstellung des Widerstandes 80 der Stellung des "Gaspedals" folgt. Daher wird die Drehzahl des Elektromotors über den Pulswechselrichter 46 je nach der Stellung des Widerstandes 80 gesteuert.

Mit dem Bremspedal ist ein Bremssteuerglied, das als Schalter 82 ausgebildet ist, gekoppelt, mit dem die Sperrung der Ansteuerung des Elektromotors bewirkt wird, bevor die mechanischen Bremsen des Fahrzeuges wirken. Bei Betätigung des Schalters 82 wird damit die Kraft vermindert, die abgebremst werden muß. Dies ist insbesondere bei ABS-Bremssystem vorteilhaft. Im übrigen haben auch die mit dem Rad gekoppelten Teile in vorteilhafter Weise ein geringes Gewicht, weil keine herkömmliche Kuppelung vorhanden ist und sich nur der Läufer des Motors frei dreht. In Reihe mit dem Schalter 82 ist ein weiterer Schalter 84 vorgesehen, der mit dem Kuppelungspedal gekoppelt ist und als Leerlaufsteuerglied dient, das die Sperrung der Ansteuerung des Elektromotors bewirkt. Der Schalter 84 kann auch als ein am Schalthebel angeordneter Druckschalter ausgebildet sein, wobei dann das Kuppelungspedal entfallen kann.

Die beiden Schalter 82 und 84 bewirken die Reglerfreigabe und die Impulsfreigabe, so daß der Elektromotor ohne Drehmoment frei oder leer läuft. Schließlich ist noch ein Schalter 86 vorgesehen, der einen Freigaberegler darstellt und beim Einschalten "Zündung" geschlossen wird, wobei das Starten des Motors verzögert wird. Der Schalter 86 liegt zwischen einer Spannungsversorgung und einem Steuereingang für die Antriebsfreigabe.

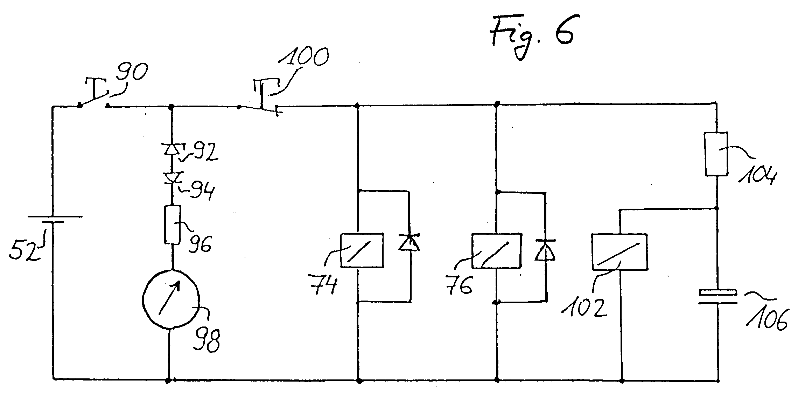

Fig. 6 zeigt die Schaltung des Batteriesteuerkreises mit Not-Aus-Schaltung. Die Schaltung wird von der Bordbatterie 52 gespeist und über einen Hauptschalter 90 ("Zündschalter") eingeschaltet. Über der Bordbatterie 52 ist eine Reihenschaltung aus einer Zener-Diode 92, einer Diode 94 einem Widerstand 96 und einem Spannungsmeßgerät 98 geschaltet, das die Spannung der Bordbatterie 52 anzeigt. In der Versorgungsleitung der Schaltung ist ein Not-Aus-Tastschalter 100 vorgesehen, der bei Betätigung das Abschalten des Fahrstroms und das Abschalten des Pulswechselrichters 46 gewährleistet. Bei Betätigung des Not-Aus-Tastschalters 100 fallen die beiden Gleichspannungsschaltschütze 74, 76 ab und unterbrechen die beiden Leitungen des Fahrstromes (Fig. 4). Bei Betätigung des Not-Aus-Tastschalters 100 fällt ferner ein Relais 102 ab, das den Schalter 86 betätigt. Wie aus Fig. 6 zu ersehen ist, zieht das Relais 102 mit einer Zeitverzögerung zu der Einschaltung des Umschalters 90 an, wobei die Zeitverzögerung durch einen Widerstand 104 und einen Kondensator 106 vorgegeben wird, die parallel zu der Bordbatterie 52 liegen und zwischen denen der eine Anschluß des Relais' 102 liegt. Der andere Anschluß des Relais' 102 ist mit einem Anschluß der Bordbatterie 52 verbunden.

Da bei einem Elektroauto der Motor nicht als Wärmequelle dienen kann, ist eine elektrische Heizeinrichtung (nicht gezeigt) zur Innenraumbeheizung des Fahrzeuges vorgesehen, die als Heizgebläse mit Lüftermotor ausgestaltet sein kann. Zur Versorgung eines ABS-Bremssystems mit einem ausreichenden Vakuum ist eine separate Vakuum-Einrichtung (nicht gezeigt) vorgesehen. Schließlich sind Vorrichtungen zur optischen oder akustischen Signalisierung des Betriebszustandes der Batterien, der Antriebssteuerung und des Motors vorgesehen. Insbesondere wird die Spannung der Fahrbatterien, der Fahrstrom, der Rückspeisungsstrom und die Spannung der Bordbatterie angezeigt. Desweiteren kann durch Anzeigelampen angezeigt werden, daß der Regler des Pulswechselrichters eingeschaltet ist und die Vakuumpumpe läuft.

Mit den oben beschriebenen Bedienungselementen ist die Bedienung des Fahrzeuges weitgehend an die Bedienung eines Benzin betriebenen Kraftfahrzeuges angeglichen. Das Starten des Elektroautos erfolgt wie üblich durch Drehen des "Zündschlüsssels". Damit wird der Pulswechselrichter entriegelt und freigegeben, und eine Lampe zeigt die Freigabe des Reglers und eine weitere Lampe die Funktion der Vakuumpumpe an. Ein Gang kann ohne Betätigung der "Kuppelung" beim Anfahren eingelegt werden, sofern das Gaspedal nicht betätigt ist und das Fahrzeug noch steht. Durch Betätigen des Gaspedals setzt sich das Fahrzeug in Bewegung. Der Schaltvorgang in den zweiten oder einen anderen Gang wird wie üblich durch Betätigung der Kuppelung, Freigeben des Gaspedals und so weiter vollzogen. Ist der Gang eingelegt und wird das Kuppelungspedal losgelassen, kann erneut Gas gegeben werden.

## Patentansprüche

1. Elektrische Antriebseinheit für mobile Fahrzeuge mit mindestens einem aus Batterien gespeisten Elektromotor, einer Kraftübertragungseinrichtung, die den Elektromotor mit der Antriebswelle des angetriebenen Elements verbindet, und einer Motorsteuerungeinrichtung, **dadurch gekennzeichnet, daß** der Elektromotor (6) ein bürstenloser Synchronmotor mit einer Nennbetriebsspannung im Bereich von ca. 210 V bis 600 V ist, daß die Motorsteuerungeinrichtung (46) eine Transistor- oder Thyristor-Pulswechselrichter-Antriebssteuerung aufweist, und daß der Syonchronmotor im Vier-Quadranten-Betrieb betrieben ist.

2. Antriebseinheit nach Anspruch 1, **dadurch gekennzeichnet, daß** der Synchronmotor Seltene-Erden-Magnete, einen bürstenlosen Tachogenerator und einen elektronischen Rotorlagegeber für eine elektronische Kommutierung aufweist.

3. Antriebseinheit nach Anspruch 1 oder 2, **dadurch gekennzeichnet, daß** die Motorwelle (16) des Elektromotors (6) mit der Antriebswelle des angetriebenen Elements bzw. über die Getriebewelle (28) eines Getriebes (8) mit dem angetriebenen Element direkt fest verbunden ist.

4. Antriebseinheit nach einem der Ansprüch 1 bis 3, **gekennzeichnet durch** eine elastische Verbindungseinrichtung (10) zwischen der Motorwelle des Elektromotors (6) und der Antriebswelle des angetriebenen Elements bzw. der Getriebewelle (28) des Getriebes.

5. Antriebseinheit nach Anspruch 4, **dadurch gekennzeichnet, daß** die Verbindungseinrichtung (10) eine elastische Scheibe (18), vorzugsweise eine Gummischeibe, aufweist, die einerseits mit einem Flansch (12) mit einer Verbindungsmuffe zur Verbindung mit der Motorwelle (16) und andererseits mit einem Flansch (22) mit einer Verbindungsmuffe zur Verbindung mit der Antriebswelle bzw. der Getriebewelle (28) verbunden ist.

6. Antriebseinheit nach einem der vorhergehenden Ansprüchen; **gekennzeichnet durch** ein Drehzahlsteuerglied (80) zur Steuerung der Drehzahl des Elektromotors über die Motorsteuereinrichtung.

7. Antriebseinheit nach einem der vorhergehenden Ansprüchen; **gekennzeichnet durch** ein Leerlaufsteuerglied, das einen elektrischen Schalter (84) zur Sperrung der Ansteuerung des Elektromotors aufweist.

8. Antriebseinheit nach Anspruch 7, **dadurch gekennzeichnet, daß** der Schalter (84) durch ein "Kupplungspedal" oder durch eim "Gaspedal" bei dessen Rücknahme betätigbar ist.

9. Antriebseinheit nach Anspruch 7, **dadurch gekennzeichnet, daß** der Schalter (84) ein an einem Schalthebel angeordneter Druckschalter ist.

10. Antriebseinheit nach einem der vorhergehenden Ansprüchen; **gekennzeichnet durch** eine Not-Aus-Schalteinrichtung mit einem Not-Aus-Tastschalter (100) zur zweipoligen Trennung der Motorsteuereinrichtung von der Batterie (2).

11. Antriebseinheit nach einem der vorhergehenden Ansprüchen; **gekennzeichnet durch** ein Schaltnetzteil (50) zur Ladung und Pufferung der Bordbatterien (52).

12. Antriebseinheit nach einem der vorhergehenden Ansprüchen; **gekennzeichnet durch** ein Bremssteuerglied, das einen Schalter (82) aufweist, der die Sperrung der Ansteuerung des Elektromotors bewirkt, bevor die mechanischen Bremsen des Fahrzeuges wirken.

13. Antriebseinheit nach Anspruch 12, dadurch gekennzeichnet, daß mit einem Bremspedal ein Wegsensor gekoppelt ist, der die Rückspeisung in die Batterien derart steuert, daß in einem anfänglichen Bereich eines Bremspedal-Leerwegs, bevor die normale Bremskraft über die Bremsen einsetzt, keine Rückspeisung erfolgt, während in dem rechtlichen Bereich des Bremspedal-Leerwegs eine Rückspeisung erfolgt.

14. Antriebseinheit nach Anspruch 13, **dadurch gekennzeichnet,** daß ein Progressivitäts-Schalter vorgesehen ist, der in dem restlichen Bereich des Bremspedal-Leerweges wirksam ist.

15. Antriebseinheit nach einem der vorhergehenden Ansprüchen; **gekennzeichnet durch** Vorrichtungen zur optischen oder akustischen Signalisierung des Betriebszustandes der Batterien, der Antriebssteuerung und des Motors.
